# EUROPEAN PATENT SPECIFICATION

(11) **EP 4 513 615 B1**
(45) Date of publication and mention of the grant of the patent: **06.05.2026**
(21) Application number: 23193423.3
(22) Date of filing: 25.08.2023
(51) Int. Cl.: H01M 10/42, H01M 10/48, H01M 50/519, H01M 50/569, H01M 50/583

(54) **BATTERY SYSTEM AND METHOD OF ASSEMBLING A BATTERY SYSTEM**
BATTERIESYSTEM UND VERFAHREN ZUR MONTAGE EINES BATTERIESYSTEMS
SYSTÈME DE BATTERIE ET PROCÉDÉ D'ASSEMBLAGE D'UN SYSTÈME DE BATTERIE

(43) Date of publication of application: 26.02.2025
(73) Proprietor: Samsung SDI Co., Ltd., Yongin-si, Gyeonggi-do 17084 (KR)
(72) Inventor: Gombats, Ilya, 8052 Graz (AT); Haring, Fritz, 8600 Bruck a. d. Mur (AT)
(74) Representative: Gulde & Partner

(56) References cited:
- CN-A- 115 149 221
- CN-U- 216 085 214

## Description

### Field of the Disclosure

The present disclosure relates to a battery system, a battery monitoring unit for the battery system and a method of assembling the battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable or secondary battery differs from a primary battery in that it is designed to be repeatedly charged and discharged, while the latter is designed to provide only an irreversible conversion of chemical to electrical energy. Low-capacity rechargeable batteries are used as a power supplies for small electronic devices, such as cellular phones, notebook computers and camcorders, while high-capacity rechargeable batteries are used as a power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*).

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (e.g., a total voltage of the battery pack or battery modules and/or voltages of individual cells), temperature (e.g., an average temperature of the battery pack or battery modules, coolant intake temperature, coolant output temperature, and/or temperatures of individual cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be distributed, with a BMS board is installed at each cell, with just a single communication cable between the battery and a controller. In yet other examples, the BMS may have a modular construction including a few controllers, each handling a certain number of cells, while communicating between the controllers. Centralized BMSs are most economical, but are least expandable and are plagued by a multitude of wires. Distributed BMSs are the most expensive but are simplest to install and offer the cleanest assembly. Modular BMSs provide a compromise of the features and problems of the other two topologies.

Static control of battery power output and charging may not be sufficient to meet the dynamic power demands of various electrical consumers connected to the battery system. Thus, steady exchange of information between the battery system and the controllers of the electrical consumers may be employed. This information may include the battery system's actual state of charge (SoC), potential electrical performance, charging ability and internal resistance as well as actual or predicted power demands or surpluses of the consumers. Therefore, battery systems usually include a battery management system (BMS), for obtaining and processing such information on a system level and may also include a plurality of battery module managers (BMMs), which are part of the system's battery modules and obtain and process relevant information on a module level. The BMS usually measures the system voltage, the system current, the local temperature at different places inside the system housing, and the insulation resistance between live components and the system housing while the BMMs usually measure the individual cell voltages and temperatures of the battery cells in a battery module.

The BMS/BMU is provided to manage the battery pack, such as by protecting the battery from operating outside its safe operating area (or safe operating parameters), monitoring its state, calculating secondary data, reporting that data, controlling its environment, authenticating it and/or balancing it.

In case of an abnormal operation state (or in the event of an abnormal condition), a battery pack should be disconnected from a load connected to a terminal of the battery pack. Therefore, battery systems may include a battery disconnect unit (BDU), that is electrically connected between the battery module and battery system terminals. The BDU is the primary interface between the battery pack and the electrical system of the vehicle. The BDU includes electromechanical switches that open or close high current paths between the battery pack and the electrical system. The BDU provides feedback to the battery control unit (BCU), accompanied to the battery modules such as voltage and current measurements. The BCU controls the switches in the BDU by using low current paths based on the feedback received from the BDU. The primary functions of the BDU may include controlling current flow between the battery pack and the electrical system and current sensing. The BDU may further manage additional functions such as external charging and pre-charging.

In this respect, a vehicle battery pack wiring harness is known from CN 218334041 U. The battery pack wiring harness combines a main line and a flexible printed circuit branch line. This allows an easier and more cost-effective connection to battery cells in comparison to a traditional flexible circuit board. The wiring harness includes a flexible flat cable main line with a plurality of conductors and an insulating layer which is partially peeled to form gaps that expose conductors in order to solder flexible printed circuit branch lines via holes of soldering points to the conductors. A circuit board is connected with a connector to realize an overall circuit connection of the vehicle battery pack wiring harness, and to realize the monitoring of the battery cells of the battery pack.

Furthermore, CN 216488417 U discloses a collection structure of a flexible flat cable, a printed circuit board, a temperature-sensing package and bus bars. The flexible flat cable includes a main body, a flexible flat cable voltage sub strip and a flexible flat cable temperature-sensing sub-strip which is bent twice and welded to the temperature-sensing package. The temperature-sensing package includes a printed circuit branch line temperature acquisition board, a thermistor and an insulating board.

CN 115 149 221 A1 discloses a vehicle battery pack wire harness, which comprises an flexible flat cable (FFC) main wire, a first flexible printed circuit (FPC) branch wire and a second FPC branch wire, and is characterized in that the FFC main wire comprises a plurality of conductors arranged in parallel in the same direction and an insulating layer wrapping the plurality of conductors. The insulating layer can enable two adjacent conductors to be insulated from each other and is peeled to form a first gap and a second gap which can expose at least one conductor part. The first FPC branch line can be electrically connected with the conductor exposed out of the first notch, and the first FPC branch line is used for collecting information of voltage of a battery cell of the vehicle battery pack. The second FPC branch line can be electrically connected with the conductor exposed out of the second notch, and the second FPC branch line is used for collecting information of voltage and temperature of a battery cell of the vehicle battery pack.

CN 216 085 214 U discloses a signal acquisition wire harness assembly and a battery system with such a signal acquisition wire harness assembly. The signal acquisition wire harness assembly comprises a flexible flat cable device, a flexible circuit board and a target acquisition structure, the flexible flat cable device comprises a signal acquisition branch, the signal acquisition branch is connected with the target acquisition structure through the flexible circuit board, the flexible circuit board comprises a fuse, and the fuse is connected with the target acquisition structure through the flexible circuit board.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a battery system including: a battery pack including a plurality of battery cells. The battery system further includes a cell monitoring circuit and a conductor arrangement including a plurality of conductor lines, wherein the conductor arrangement includes a flexible flat cable and a plurality of printed circuit boards which overlap with the flexible flat cable, wherein a first end of the conductor lines is connected to the cell monitoring circuit via the flexible flat cable and a second end of the conductor lines is electrically connected to live parts of the battery cells via the printed circuit boards. The flexible flat cable includes portions of the conductor lines which are routed through and fixed to the openings of the printed circuit boards in an electrically conduction manner.

According to another aspect of the present disclosure, there is provided a battery monitoring unit including a conductor arrangement including a plurality of conductor lines, wherein the conductor arrangement includes a flexible flat cable and a plurality of printed circuit boards which overlap with the flexible flat cable, wherein a first end of the conductor lines is connected to the cell monitoring circuit via the flexible flat cable and a second end of the conductor lines is electrically connectable to live parts of the battery cells via the printed circuit boards. The flexible flat cable includes portions of the conductor lines which are routed through and fixed to the openings of the printed circuit boards in an electrically conduction manner.

According to yet another aspect of the invention, there is provided an electric vehicle including such a battery system.

Furthermore, the invention is related to a method for assembling such a battery system, wherein the method includes the steps of:
a) providing such a battery system,
b) connecting a first end of the conductor lines to the cell monitoring circuit via the flexible flat cable,
c) connecting a second end of the conductor lines to live parts of the battery cell via the printed circuit boards.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a battery system according to an embodiment of the invention.
- Fig. 2: illustrates a schematic view of a battery monitoring unit according to prior art.
- Fig. 3: illustrates a schematic three-dimensional view of a conductor arrangement of a battery monitoring unit according to an embodiment of the invention.
- Fig. 4: illustrates another schematic view of a conductor arrangement of a battery monitoring unit according to an embodiment of the invention.
- Fig. 5: discloses a larger section of a conductor arrangement with a flexible flat cable and a printed circuit board according to an embodiment of the invention.
- Fig. 6: discloses a flexible flat cable of a battery monitoring unit according to an embodiment of the invention.
- Fig.7: discloses another view of a flexible flat cable of a battery monitoring unit according to an embodiment of the invention.
- Fig. 8: discloses an embodiment of a printed circuit board of a battery monitoring unit according to the invention.
- Fig. 9: illustrates another embodiment of a printed circuit board of a battery monitoring unit according to the invention.
- Fig. 10: illustrates another printed circuit board for a battery monitoring unit according to the invention.
- Fig. 11: illustrates a flowchart of a process according to the invention for assembling such a battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

The invention is directed to a battery system including a battery pack and a plurality of battery cells. The battery system further includes a cell monitoring circuit and a conductor arrangement including a plurality of conductor lines, wherein the conductor arrangement includes a flexible flat cable and a plurality of printed circuit boards which overlap with the flexible flat cable, wherein a first end of the conductor lines is connected to the cell monitoring circuit via the flexible flat cable and a second end of the conductor lines is electrically connected to live parts of the battery cells via the printed circuit boards.

In other words, the invention is related to a battery system with a battery pack including a plurality of battery cells and a unit for electrically connecting those battery cells. The electrically connecting lines connect the cell poles of the battery cells to a battery measurement module. The battery system further includes a battery monitoring system with a conductor arrangement including a plurality of conductor lines, electrically connecting a cell monitoring circuit with the battery cells of the battery pack. The conductor arrangement includes a flexible flat cable as main string and a plurality of printed circuit boards which at least partly overlap with the flexible flat cable. First ends of the conductor lines are connected to the battery cell monitoring circuit via the flexible flat cable. Second ends of the conductor lines are electrically connected to the connection parts of the battery cells via the printed circuit boards.

The battery system allows a low-cost conductor arrangement to replace more expensive flexible printed circuits for the electrical connection and monitoring of the battery cells. Furthermore, it is possible to use less expensive material and avoid cost extensive materials such as polyimide. The new design allows the usage of much lower cost material for the flexible flat cable instead of current state of the art solutions with flexible printed circuits. The flexible flat cable can be made of straight copper and/or aluminum lines without critical environmental processes. Based on the usage of straight metal lines the design of the electrical connection can be optimized in order to further reduce costs and increase reliability. Furthermore, the proposed battery system allows an easy connection for voltage sensing and temperature sensing and total flexibility for assembly position.

According to one embodiment, the conductor lines are routed along the flexible flat cable and branched into the plurality of printed circuit boards. This enables particularly simple assembly and particularly simple contacting of the battery cells.

According to the invention, the flexible flat cable includes portions of the conductor lines which are routed through and fixed to the openings of the printed circuit boards in an electrically conduction manner. This ensures a particularly stable and reliable fastening of the conductor lines to the printed circuit boards.

For example, the portions of the conductor lines which are routed through and fixed to the openings of the printed circuit boards are soldered to the openings of the printed circuit boards. This further improves the connection between the conductor lines and the printed circuit boards.

According to an embodiment of the invention, the flexible flat cable and/or the printed circuit board includes at least one stability enhancing element which is routed through and fixed to the openings of the printed circuit boards. By a stability enhancing element, the bending stiffness of the flexible flat cable can be improved, reducing the risk of the corresponding conductor snapping off. Furthermore, the assembly process can be eased by such a stability enhancing conductor to facilitate the electrical contacting of the battery cells of the battery pack.

For example, the stability enhancing element is isolated from the cell monitoring circuit by at least one cut out which interrupts the stability enhancing conductor. This reduces the risk of electrical short circuits.

According to another embodiment of the battery system, all printed circuit boards connecting the flexible flat cable with the live parts of the battery cells are identical. By using identical printed circuit boards, the variety of parts and the associated costs can be reduced. In addition, the use of identical components can reduce assembly costs and avoid the use of wrong parts.

In an embodiment of the invention all printed circuit boards including one of the temperature sensors are identical. By using identical printed circuit boards for the connection or integration of the temperature sensors, the variety of parts and the associated costs can be reduced. In addition, the use of identical components can reduce assembly costs and avoid the use of wrong parts.

According to another embodiment of the invention, at least one of the printed circuit boards connecting the flexible flat cable with one of the live parts of the battery cells includes a fuse. By integrating a fuse into the printed circuit board, the number of components can be reduced when assembling the battery system. This can reduce the work steps and thus the costs in the assembly process.

For example, all printed circuit boards connecting the flexible flat cable with the live parts of the battery cells include fuses.

In another embodiment of the invention, the conductor arrangement includes an additional printed circuit board with a plurality of fuses connected between the flexible flat cable and the cell monitoring circuit.

According to another embodiment, there is provided a cell monitoring unit including a cell monitoring circuit and a conductor arrangement including a plurality of conductor lines. The conductor arrangement includes a flexible flat cable and a plurality of printed circuit boards which at least partly overlap with the flexible flat cable, wherein a first end of the conductor lines is connected to the cell monitoring circuit via the flexible flat cable and a second end of the conductor lines is electrically connected to live parts of the battery cells via the printed circuit boards and/or to at least one temperature sensor included by one of the printed circuit boards.

Yet another aspect of the invention is related to an electric vehicle including a battery system as described in the above-mentioned paragraphs.

According to another aspect of the invention, it is provided a method for assembling a battery system, wherein the method includes the following steps of:
a) providing a battery system as described in the above-mentioned paragraphs
b) connecting a first end of the conductor lines to the cell monitoring circuit via the flexible flat cable, and
c) connecting a second end of the conductor lines to live parts of the battery cell via the printed circuit boards and/or to at least one temperature sensor included by one of the printed circuit boards.

### Specific Embodiments

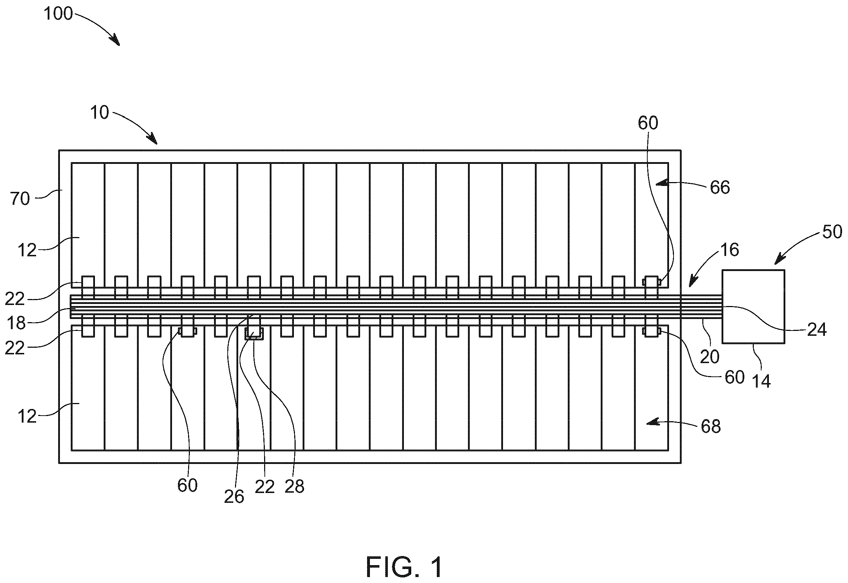

Fig. 1 is a schematic view illustrating a battery system 100 with a battery pack 10 and a battery monitoring unit 50 according to an embodiment of the invention. The battery monitoring unit 50 includes a cell monitoring circuit 14 and a conductor arrangement 16 including a plurality of conductor lines 18. The conductor arrangement 16 includes a flexible flat cable 20 and a plurality of printed circuit boards 22 which overlap with the flexible flat cable 20. A first end (or first side) 24 of the conductor lines 18 is connected to the cell monitoring circuit 14 via the flexible flat cable 20. A second end (or second side) 26 of the conductor lines 18 is connected to live parts 28 such as cell poles 60 of the battery cells 12 via the printed circuit board 22. The battery pack 10 as shown in Fig. 1 includes a housing 70 and a plurality of battery cells 12 arranged in a first battery stack 66 and a second battery stack 68 within the housing 70.

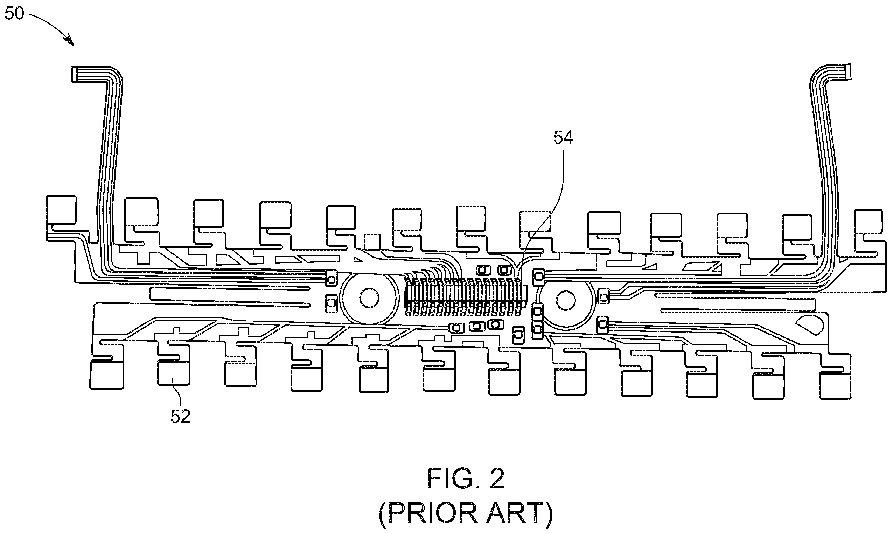

Fig.2 discloses a battery monitoring unit 50 according to prior art. The battery monitoring unit 50 includes a plurality of flexible printed circuits 52 which are connected to a circuit board 54 of the battery monitoring unit 50. The battery monitoring unit 50 according to prior art is good and reliable, but expensive and over engineered in terms of the materials used. For example, in the flexible printed circuits 52 expensive material such as PI (polyimide) is used, which is an overshoot in parameters like voltage resistance, insulation resistance and temperature resistance as well. Based on flexible printed circuit 52 technology additional material for the production is required which has to be scraped after final production (lot of material loss).

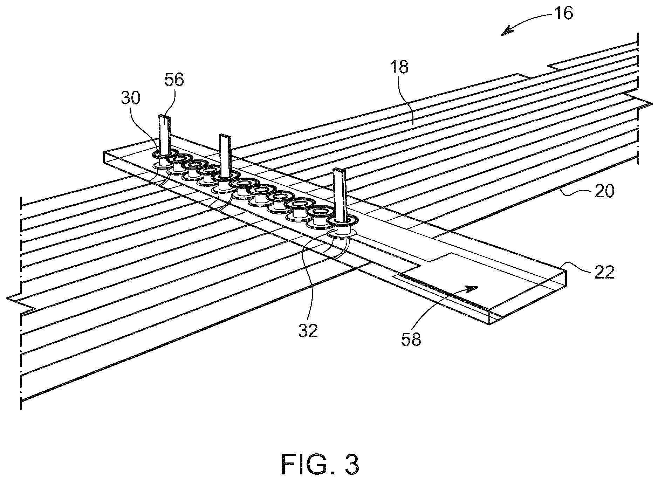

Fig.3 discloses a conductor arrangement 16 according to an embodiment of the invention. The conductor arrangement 16 includes a flexible flat cable 20 with a plurality of conduction lines 18. The flexible flat cable 20 includes a plurality of pins 56 for connecting openings 30 of a printed circuit boards 22 to the conductor lines 18. The pins 56 are routed along the flexible flat cable 20 and branched into the plurality of the printed circuit boards 22. As shown in Fig. 3, the flexible flat cable 20 includes pins 56, that are routed through the openings 30 of the printed circuit boards 22 and fixed to the openings 30 of the printed circuit boards 22 in an electrically conductive manner. For example, the pins 56 of the conductor lines 18 of the flexible flat cable 20 are soldered to the openings 30 of the printed circuit boards 22. The new solution allows the usage of much lower cost material flexible flat cable 20 instead of current state of art solution flexible printed circuits 52. The flexible flat cable 20 is made out of straight copper or aluminum conductor lines 18 without critical environmental processes. This ends in a better material usage compared to flexible printed circuits 52. Based on this straight conductor lines 18 the design is adopted to enable the flexible flat cable 20 and printed circuit boards 22 concept of the conductor arrangement 16. The printed circuit board 22 further includes a welding surface 58 for connecting the printed circuit board 22 to live parts 28 of a battery cell 12.

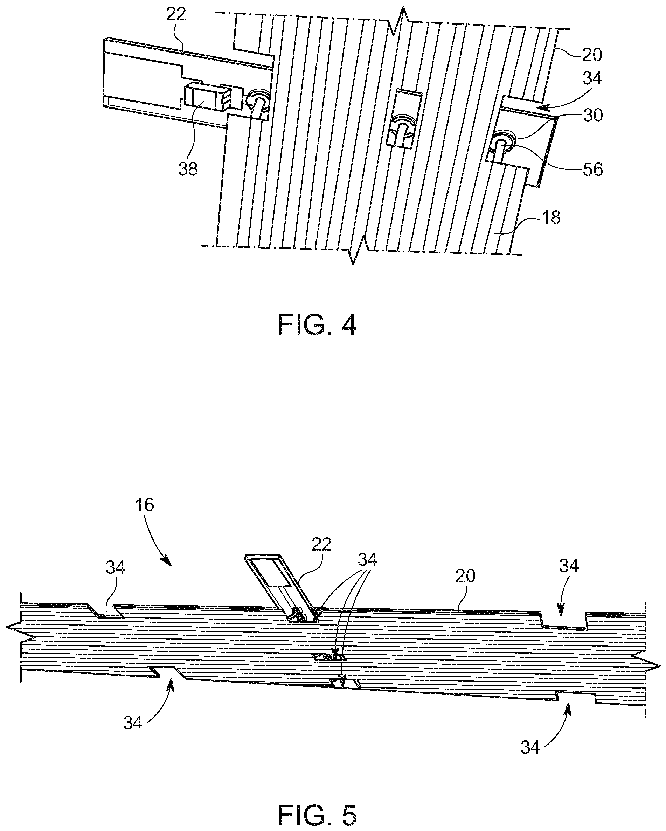

Fig.4 discloses a printed circuit board 22 that is connected to the flexible flat cable 20 via pins 56 of the flexible flat cable 20 and openings 30 in the printed circuit board 22. The printed circuit board 22 further includes a fuse 38, for example, SMD type fuse.

Fig.5 discloses another view of a conductor arrangement 16 including a flexible flat cable 20 and a printed circuit board 22 electrically connected to the flexible flat cable 20. The flexible flat cable 20 further includes cut outs 34 to prevent contact between the pins 56 and the cell poles 60 of the battery cells 12.

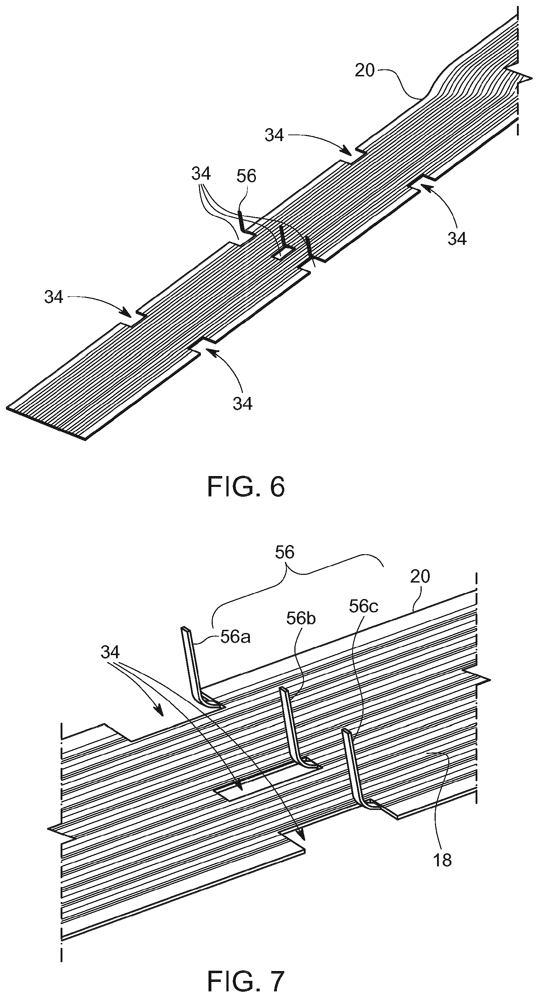

Fig. 6 discloses a flexible flat cable 20 with a plurality of cut outs 34. The flexible flat cable 20 includes three cut outs 34 for the pins 56 and four additional cut outs before and after the pins 56 to avoid potential short cut between the pins 56.

Fig. 7 shows an enlarge view of the section of the flexible flat cable 20 as shown in Fig. 6. The flexible flat cable 20 has three pins 56 cut out and bend 90 degree to be available for soldering to the printed circuit board 22. First and the last pins 56a, 56c are used for mechanical stability of the soldered printed circuit board 22 and middle contact pin 56b used to connect to the welding surface 58 and to the cell pole 60 of the battery cell 12.

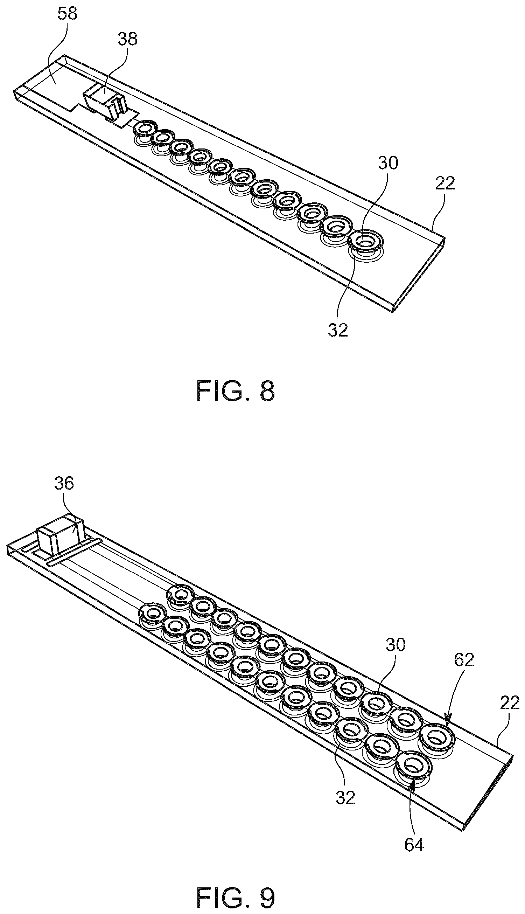

Fig. 8 shows a printed circuit board 22 of the above embodiment of the invention. The printed circuit board 22 is designed to be used at any point and have contact to the cell pole 60 through the welding surface 58 or plated copper and the fuse 38 as predesigned break point in case of unintended short cut. This printed circuit board 22 is small and universal, that is why it could be produced in large quantity and that is why it will be very cheap and low-cost component.

Instead of one middle contact pin, two pins could be cut out and bent to create a connection for a temperature sensor. Fig. 9 discloses an alternative example of a printed circuit board 22. The printed circuit board 22 includes two rows 62, 64 of openings 30 with stability enhancing elements 32 and a temperature sensor 36 is provided on the printed circuit board 22. A first pin (not shown) of the flexible flat cable 20 is connected to the first row 62 and a second pin (not shown) is connected to the second row 64, so that the flexible flat cable 20 is connected to the live parts 28 of the battery cell 12 via the temperature sensor 36.

One big advantage of the above small universal printed circuit boards 22 is, that voltage sensing and or temperature sensing is connected in the same way and total flexible for assembly position.

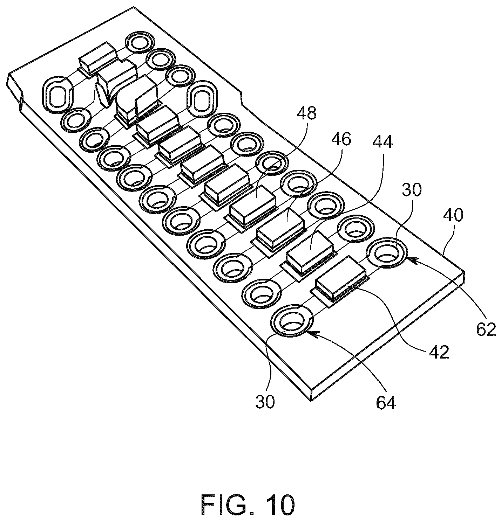

Fig. 10 discloses an additional printed circuit board 40 including a plurality of fuses 42, 44, 46, 48. The additional printed circuit board 40 may be used to have all the fuses 42, 44, 46, 48 on one printed circuit board 40, so that the other printed circuit boards can be executed without further fuses. The printed circuit board 40 includes a first row 62 and a second row 64 of contact elements with openings 30 for electrically connecting the printed circuit board 40 to the flexible flat cable 20, wherein the fuses 42, 44, 46, 48 are located between the first row 62 and the second row 64 of contact elements.

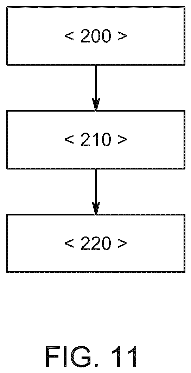

Fig. 11 discloses a flowchart of a process according to the invention for assembling the battery system 100 according to the invention. In a first step <200>, the battery system as described in the previous sections is provided. In a second step <210>, the first end 24 of the conductor lines 18 is connected to the cell monitoring circuit 14 via the flexible flat cable 20. In a third step <220>, the second end 26 of the conductor lines 18 is connected to live parts 28 of the battery cells 12 via the printed circuit boards 22. This allows an easy assembling process for the battery system 100 and an easy installment of the battery monitoring unit 50, as the printed circuit boards 22 can easily be connected to live parts 28 of the battery cells such as cell poles 60.

### Reference signs

- 10: battery pack
- 12: battery cell
- 14: cell monitoring circuit
- 16: conductor arrangement
- 18: conductor lines

- 20: flexible flat cable
- 22: printed circuit board
- 24: first end
- 26: second end
- 28: live parts

- 30: opening
- 32: stability enhancing element
- 34: cut out
- 36: temperature sensor
- 38: fuse

- 40: printed circuit board
- 42: fuse
- 44: fuse
- 46: fuse
- 48: fuse

- 50: battery monitoring unit
- 52: flexible printed circuit
- 54: circuit board
- 56: pin
- 58: welding surface

- 60: cell pole
- 62: first row
- 64: second row
- 66: first battery stack
- 68: second battery stack

- 70: housing

- 100: battery system

## Claims

1. A battery system (100), comprising:
a battery pack (10) comprising a plurality of battery cells (12); a cell monitoring circuit (14) and a conductor arrangement (16) comprising a plurality of conductor lines (18), wherein the conductor arrangement (16) comprises a flexible flat cable (20) and a plurality of printed circuit boards (22) which overlap with the flexible flat cable (20), wherein a first end (24) of the conductor lines (18) is connected to the cell monitoring circuit (14) via the flexible flat cable (20) and a second end (26) of the conductor lines (18) is electrically connected to live parts (28) of the battery cells (12) via the printed circuit boards (22), wherein the flexible flat cable (20) comprises portions of the conductor lines (18) which are routed through and fixed to openings (30) of the printed circuit boards (22) in an electrically conduction manner..

2. The battery system (100) according to claim 1, wherein the conductor lines (18) are routed along the flexible flat cable (20) and branched into the plurality of printed circuit boards (22).

3. The battery system (100) according to claim 1 or 2, wherein the portions of the conductor lines (18) which are routed through and fixed to the openings (30) of the printed circuit boards (22) are soldered to the openings (30) of the printed circuit boards (22).

4. The battery system (100) according to any of the preceding claims, wherein the flexible flat cable (20) and/or the printed circuit board (22) comprises at least one stability enhancing element (32) which is routed through and fixed to the openings (30) of the printed circuit boards (22).

5. The battery system (100) according to claim 4, wherein the stability enhancing element (32) is isolated from the cell monitoring circuit (14) by at least one cut out (34) which interrupts the stability enhancing conductor (32).

6. The battery system (100) according to any of the preceding claims, wherein all printed circuit boards (22) connecting the flexible flat cable (20) with the live parts (28) are identical.

7. The battery system (100) according to any of the preceding claims, wherein a plurality of printed circuit boards (22) comprises a temperature sensor (36) and all printed circuit boards (22) comprising one of the temperature sensors (36) are identical.

8. The battery system (100) according to any of the preceding claims, wherein at least one of the printed circuit boards (22) connecting the flexible flat cable (20) with one of the live parts (28) comprises a fuse (38).

9. The battery system (100) according to any of the preceding claims, wherein the at least one of the printed circuit boards (22) comprises a temperature sensor (36) and the conductor line (18) is electrically connected to live parts (28) of a battery cell (12) via the temperature sensor (36).

10. The battery system (100) according to any of the preceding claims, wherein the conductor arrangement (16) comprises an additional printed circuit board (40) with a plurality of fuses (42, 44, 46, 48) connected between the flexible flat cable (20) and the cell monitoring circuit (14).

11. A battery monitoring unit (50) comprising a cell monitoring circuit (14) and a conductor arrangement (16) comprising a plurality of conductor lines (18), wherein the conductor arrangement (16) comprises a flexible flat cable (20) and a plurality of printed circuit boards (22) which overlap with the flexible flat cable (20), wherein a first end (24) of the conductor lines (18) is connected to the cell monitoring circuit (14) via the flexible flat cable (20) and a second end (26) of the conductor lines (18) is electrically connectable to live parts (28) of the battery cells (12) via the printed circuit boards (22), wherein the flexible flat cable (20) comprises portions of the conductor lines (18) which are routed through and fixed to openings (30) of the printed circuit boards (22) in an electrically conduction manner.

12. An electric vehicle comprising the battery system (100) according to anyone of claims 1 through 10.

13. A method for assembling a battery system (100), wherein the method comprises the steps of:
a) providing a battery system (100) as defined in claim 1;
b) connecting a first end (24) of the conductor lines (18) to the cell monitoring circuit (14) via the flexible flat cable (20),
c) connecting a second end (26) of the conductor lines (18) to live parts (28) of the battery cells (12) via the printed circuit boards (22).

## Patentansprüche

1. Batteriesystem (100), umfassend:
einen Batteriepack (10), der eine Vielzahl von Batteriezellen (12) umfasst; eine Zellenüberwachungsschaltung (14) und eine Leiteranordnung (16), die eine Vielzahl von Leiterbahnen (18) umfasst, wobei die Leiteranordnung (16) ein flexibles Flachkabel (20) und eine Vielzahl von Leiterplatten (22) umfasst, die das flexible Flachkabel (20) überlappen, wobei ein erstes Ende (24) der Leiterbahnen (18) über das flexible Flachkabel (20) mit der Zellenüberwachungsschaltung (14) verbunden ist und ein zweites Ende (26) der Leiterbahnen (18) über die Leiterplatten (22) elektrisch mit spannungsführenden Teilen (28) der Batteriezellen (12) verbunden ist, wobei das flexible Flachkabel (20) Abschnitte der Leiterbahnen (18) umfasst, die elektrisch leitend durch Öffnungen (30) der Leiterplatten (22) geführt und daran befestigt sind.

2. Batteriesystem (100) nach Anspruch 1, wobei die Leiterbahnen (18) entlang des flexiblen Flachkabels (20) geführt und in die Vielzahl von Leiterplatten (22) verzweigt sind.

3. Batteriesystem (100) nach Anspruch 1 oder 2, wobei die Abschnitte der Leiterbahnen (18), die durch die Öffnungen (30) der Leiterplatten (22) geführt und daran befestigt sind, mit den Öffnungen (30) der Leiterplatten (22) verlötet sind.

4. Batteriesystem (100) nach einem der vorhergehenden Ansprüche, wobei das flexible Flachkabel (20) und/oder die Leiterplatte (22) mindestens ein Stabilitätsverbesserungselement (32) umfasst, das durch die Öffnungen (30) der Leiterplatten (22) geführt und an daran befestigt ist.

5. Batteriesystem (100) nach Anspruch 4, wobei das Stabilitätsverbesserungselement (32) von der Zellenüberwachungsschaltung (14) durch mindestens eine Aussparung (34) isoliert ist, die den Stabilitätsverbesserungsleiter (32) unterbricht.

6. Batteriesystem (100) nach einem der vorhergehenden Ansprüche, wobei alle Leiterplatten (22), die das flexible Flachkabel (20) mit den spannungsführenden Teilen (28) verbinden, identisch sind.

7. Batteriesystem (100) nach einem der vorhergehenden Ansprüche, wobei eine Vielzahl von Leiterplatten (22) einen Temperatursensor (36) umfasst und alle Leiterplatten (22), die einen der Temperatursensoren (36) umfassen, identisch sind.

8. Batteriesystem (100) nach einem der vorhergehenden Ansprüche, wobei mindestens eine der Leiterplatten (22), die das flexible Flachkabel (20) mit einem der spannungsführenden Teile (28) verbinden, eine Sicherung (38) umfasst.

9. Batteriesystem (100) nach einem der vorhergehenden Ansprüche, wobei die mindestens eine der Leiterplatten (22) einen Temperatursensor (36) umfasst und die Leiterbahn (18) über den Temperatursensor (36) elektrisch mit spannungsführenden Teilen (28) einer Batteriezelle (12) verbunden ist.

10. Batteriesystem (100) nach einem der vorhergehenden Ansprüche, wobei die Leiteranordnung (16) eine zusätzliche Leiterplatte (40) mit einer Vielzahl von Sicherungen (42, 44, 46, 48) umfasst, die zwischen dem flexiblen Flachkabel (20) und der Zellenüberwachungsschaltung (14) verbunden sind.

11. Batterieüberwachungseinheit (50), umfassend eine Zellenüberwachungsschaltung (14) und eine Leiteranordnung (16), die eine Vielzahl von Leiterbahnen (18) umfasst, wobei die Leiteranordnung (16) ein flexibles Flachkabel (20) und eine Vielzahl von Leiterplatten (22) umfasst, die das flexible Flachkabel (20) überlappen, wobei ein erstes Ende (24) der Leiterbahnen (18) über das flexible Flachkabel (20) mit der Zellenüberwachungsschaltung (14) verbunden ist und ein zweites Ende (26) der Leiterbahnen (18) über die Leiterplatten (22) elektrisch mit spannungsführenden Teilen (28) der Batteriezellen (12) verbindbar ist, wobei das flexible Flachkabel (20) Abschnitte der Leiterbahnen (18) umfasst, die elektrisch leitend durch Öffnungen (30) der Leiterplatten (22) geführt und daran befestigt sind.

12. Elektrofahrzeug, umfassend das Batteriesystem (100) nach einem der Ansprüche 1 bis 10.

13. Ein Verfahren zum Montieren eines Batteriesystems (100), wobei das Verfahren die folgenden Schritte umfasst:
a) Bereitstellen eines Batteriesystems (100) nach Anspruch 1;
b) Verbinden eines ersten Endes (24) der Leiterbahnen (18) mit der Zellenüberwachungsschaltung (14) über das flexible Flachkabel (20),
c) Verbinden eines zweiten Endes (26) der Leiterbahnen (18) mit spannungsführenden Teilen (28) der Batteriezellen (12) über die Leiterplatten (22).

## Revendications

1. Système de batterie (100), comportant :
un bloc-batterie (10) comportant une pluralité d'éléments de batterie (12) ; un circuit de surveillance d'élément (14) et un agencement de conducteurs (16) comportant une pluralité de lignes de conducteurs (18), dans lequel l'agencement de conducteurs (16) comporte un câble plat flexible (20) et une pluralité de cartes de circuit imprimé (22) qui chevauchent le câble plat flexible (20), dans lequel une première extrémité (24) des lignes de conducteurs (18) est connectée au circuit de surveillance d'élément (14) via le câble plat flexible (20) et une deuxième extrémité (26) des lignes de conducteurs (18) est électriquement connectée à des parties sous tension (28) des éléments de batterie (12) via les cartes de circuit imprimé (22), dans lequel le câble plat flexible (20) comporte des portions des lignes de conducteurs (18) qui sont acheminées à travers des ouvertures (30) des cartes de circuit imprimé (22) et fixées à celles-ci d'une manière électriquement conductrice.

2. Système de batterie (100) selon la revendication 1, dans lequel les lignes de conducteurs (18) sont acheminées le long du câble plat flexible (20) et se ramifient dans la pluralité de cartes de circuit imprimé (22).

3. Système de batterie (100) selon la revendication 1 ou 2, dans lequel les portions des lignes de conducteurs (18) qui sont acheminées à travers les ouvertures (30) des cartes de circuit imprimé (22) et fixées à celles-ci sont brasées dans les ouvertures (30) des cartes de circuit imprimé (22).

4. Système de batterie (100) selon l'une quelconque des revendications précédentes, dans lequel le câble plat flexible (20) et/ou la carte de circuit imprimé (22) comporte au moins un élément d'amélioration de stabilité (32) qui est acheminé à travers les ouvertures (30) des cartes de circuit imprimé (22) et fixé à celles-ci.

5. Système de batterie (100) selon la revendication 4, dans lequel l'élément d'amélioration de stabilité (32) est isolé du circuit de surveillance d'élément (14) par au moins une découpe (34) qui interrompt le conducteur d'amélioration de stabilité (32).

6. Système de batterie (100) selon l'une quelconque des revendications précédentes, dans lequel toutes les cartes de circuit imprimé (22) reliant le câble plat flexible (20) aux parties sous tension (28) sont identiques.

7. Système de batterie (100) selon l'une quelconque des revendications précédentes, dans lequel une pluralité de cartes de circuit imprimé (22) comporte un capteur de température (36) et toutes les cartes de circuit imprimé (22) comportant l'un des capteurs de température (36) sont identiques.

8. Système de batterie (100) selon l'une quelconque des revendications précédentes, dans lequel au moins l'une des cartes de circuit imprimé (22) reliant le câble plat flexible (20) à l'une des parties sous tension (28) comporte un fusible (38).

9. Système de batterie (100) selon l'une quelconque des revendications précédentes, dans lequel l'au moins une des cartes de circuit imprimé (22) comporte un capteur de température (36) et la ligne de conducteur (18) est électriquement connectée à des parties sous tension (28) d'un élément de batterie (12) via le capteur de température (36).

10. Système de batterie (100) selon l'une quelconque des revendications précédentes, dans lequel l'agencement de conducteurs (16) comporte une carte de circuit imprimé (40) supplémentaire dotée d'une pluralité de fusibles (42, 44, 46, 48) connectés entre le câble plat flexible (20) et le circuit de surveillance d'élément (14).

11. Unité de surveillance de batterie (50) comportant un circuit de surveillance d'élément (14) et un agencement de conducteurs (16) comportant une pluralité de lignes de conducteurs (18), dans lequel l'agencement de conducteurs (16) comporte un câble plat flexible (20) et une pluralité de cartes de circuit imprimé (22) qui chevauchent le câble plat flexible (20), dans lequel une première extrémité (24) des lignes de conducteurs (18) est connectée au circuit de surveillance d'élément (14) via le câble plat flexible (20) et une deuxième extrémité (26) des lignes de conducteurs (18) est apte à être électriquement connectée à des parties sous tension (28) des éléments de batterie (12) via les cartes de circuit imprimé (22), dans lequel le câble plat flexible (20) comporte des portions des lignes de conducteurs (18) qui sont acheminées à travers des ouvertures (30) des cartes de circuit imprimé (22) et fixées à celles-ci d'une manière électriquement conductrice.

12. Véhicule électrique comportant le système de batterie (100) selon l'une quelconque des revendications 1 à 10.

13. Procédé d'assemblage d'un système de batterie (100), dans lequel le procédé comporte les étapes de :
a) la fourniture d'un système de batterie (100) selon la revendication 1 ;
b) la connexion d'une première extrémité (24) des lignes de conducteurs (18) au circuit de surveillance d'élément (14) via le câble plat flexible (20),
c) la connexion d'une deuxième extrémité (26) des lignes de conducteurs (18) à des parties sous tension (28) des éléments de batterie (12) via les cartes de circuit imprimé (22).
